# EUROPEAN PATENT APPLICATION

(11) **EP 4 725 836 A1**
(43) Date of publication of application: **15.04.2026**
(21) Application number: 25207091.7
(22) Date of filing: 07.10.2025
(51) Int. Cl.: B64C 23/06

(54) **VORTEX GENERATING SYSTEM, ASSOCIATED AIRCRAFT AND METHOD OF EVALUATING AERODYNAMIC PERFOMANCES**

(30) Priority: 09.10.2024 DE 102024129144
(71) Applicant: Airbus Operations GmbH, 21129 Hamburg (DE)
(72) Inventor: Burchard, Alexander, 21129 Hamburg (DE); Daandels, Dort, 21129 Hamburg (DE); Grewe, Michael, 21129 Hamburg (DE)
(74) Representative: KASTEL Patentanwälte PartG mbB

(57) **Abstract**

This vortex generating system (18) comprises:
- a vortex generator (16) comprising
+ a base (22),
+ a baffle (24), moveable in rotation around a rotation axis (R) relative to the base (22), and
+ an actuator (26), configured to move the baffle (24) in rotation around the rotation axis (R) relative to the base (22); and

- a control unit (20), connected to the vortex generator (16) and comprising:
+ an acquisition module (36), configured for acquiring a target active position of the baffle (24),
+ a control module (34), configured for controlling the actuator (26) into an active configuration, in which the actuator (26) is applying a controlling torque to the baffle (24) depending on the acquired target active position, and
+ an evaluation module (40), configured for generating an inconsistency evaluation signal as a function of the controlling torque and of the target active position.

## Description

The present disclosure relates to a vortex generating system, for example for an aircraft. The present disclosure also relates to an aircraft comprising such a vortex generating system. This disclosure also relates to a method of evaluating aerodynamic performances using such a vortex generating system.

Vortex generator are aerodynamic devices configured to generate vortexes, for example to improve the aerodynamic performances of an aircraft. To that end, vortex generators are generally attached to an outer surface of an aircraft, for example upstream of a surface of the aircraft where airflow is likely to separate. Vortex generators are for example installed near leading edges of wings. Vortex generators are then configured to bring turbulence to the airflow in the boundary layer to prevent airflow detachment. Such devices are critical especially when installed on lifting surfaces, since airflow detachment might lead to stalling of the lifting surface.

Recently, in the domain of vortex generators, and especially of vortex generators for aircrafts, smart vortex generators have been proposed. Such vortex generators generally comprise an actuator which is used to move a baffle of the vortex generator. Such vortex generator aim for example at improving the vortex generation for different flight phases of an aircraft.

Such vortex generators are however not entirely satisfying. Indeed, when controlling the baffles to be in a target active position relative to the base, no mechanism exist to evaluate whether the baffle is actually in such a position or not. This absence of evaluation can jeopardize safety of operation of the aircraft. Indeed the performance of the aircraft depend on the position of such baffles and any discrepancy between the expected position of the baffle and the actual position the baffle can lead to unexpected behavior of the aircraft for an operator of the aircraft.

An object of the present invention is thus to provide a vortex generating system which improves safety of operation of an aircraft while remaining simple.

To this end, the invention relates to a vortex generating system comprising:
- a vortex generator comprising:
   + a base, configured to be connected to an external surface of an aircraft,
   + a baffle, connected to the base and moveable in rotation around a rotation axis relative to the base, and
   + an actuator, configured to move the baffle in rotation around the rotation axis relative to the base; and
- a control unit, connected to the vortex generator and comprising:
   + an acquisition module, configured for acquiring a target active position of the baffle relative to the base,
   + a control module, configured for controlling the actuator into an active configuration, in which the actuator is applying a controlling torque to the baffle depending on the acquired target active position, and
   + an evaluation module, configured for generating an inconsistency evaluation signal as a function of the controlling torque and of the target active position.

The use of an evaluation module configured for generating an inconsistency evaluation signal as a function of the controlling torque and of the target active position is especially advantageous since it smartly exploits the evaluation signal to check for any inconsistency without requiring using any dedicated sensor.

According to other advantageous aspects of the invention, the vortex generating system comprises one or more of the following features taken alone or according to all technically possible combinations:
- the acquisition module is configured for acquiring a reference control torque based on the acquired target active position, the evaluation module being configured for generating the inconsistency evaluation signal by comparing the acquired reference control torque to the controlling torque;
- the evaluation module is configured for evaluating an evaluated active position of the baffle based on the controlling torque, the evaluation module being configured to generate the inconsistency evaluation signal by comparing the evaluated active position and the target active position;
- the controlling torque applied to the baffle by the actuator in the active configuration is a torque required to maintain the baffle in the target active position;
- the control unit comprises a transmission module, configured to be connected to a display of the aircraft, the transmission module being configured to transmit an alert signal to be displayed, to the display of the aircraft, depending on the inconsistency evaluation signal generated by the evaluation module;
- the base defines a base plane configured to be substantially parallel to the external surface of an aircraft, the rotation axis being substantially perpendicular to the base plane;
- the baffle is asymmetric relative to the rotation axis;
- the acquisition module is configured to be connected to a flight control computer and configured for acquiring flight control information from the flight control computer, the evaluation module being configured for generating the inconsistency signal as a function of the controlling torque, of the target active position and of the acquired flight control information;
- the flight control information comprises at least one of the following information:
   - flight situation of the aircraft;
   - flight configuration of the aircraft;
   - attitude of the aircraft;
   - speed of the aircraft;
   - altitude of the aircraft;
   - configuration of the aircraft; and
   - meteorological information;
- the acquisition module is configured for acquiring the target active position from a plurality of predetermined target active positions;
- the acquisition module is configured for acquiring the target active position of the baffle relative to the base at sampling intervals and/or the evaluation module is configured for generating an inconsistency evaluation signal at sampling intervals, the sampling intervals duration being comprised between 0.001s and 1s;
- the vortex generating system comprises a plurality of vortex generators, the control module being connected to each of the vortex generators; and
- the control module is configured to control the actuators of at least two of the plurality of vortex generators into different active configurations.

The invention also relates to an aircraft comprising a vortex generating system as presented above.

The invention further relates to a method of evaluation aerodynamic performances using a vortex generating system as presented above, the method comprising the following steps:
- acquiring a target active position of the baffle of the vortex generator of the vortex generating system, relative to the base of said vortex generator,
- controlling the actuator of the vortex generator into an active configuration, in which the actuator is applying a controlling torque to the baffle depending on the acquired target active position, and
- generating an inconsistency evaluation signal as a function of the controlling torque and of the target active position.

The invention will be better understood when reading the following description, which is given solely by way of example and with reference to the appended drawings, in which:
- Figure 1 is a schematic view of an aircraft comprising a vortex generating system according to the invention,
- Figure 2 is a schematic view of the vortex generating system presented in figure **1****,** and
- Figure 3a to 3c are schematic top view illustrations of vortex generators of the vortex generating system illustrated on figure 2, wherein each view illustrate the vortex generator having its actuator in a different active configuration.

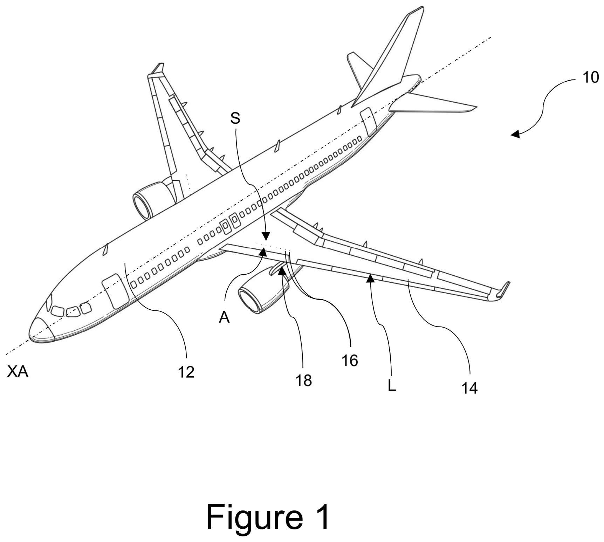

With reference to figure 1, an aircraft 10 comprises a fuselage 12 and two wings 14.

The aircraft 10 is for example an airplane and for example an airliner.

As illustrated from figure 1, the aircraft defines a longitudinal direction XA. The longitudinal direction XA correspond for example to an elongation direction of the fuselage 12 of the aircraft.

The aircraft 10 comprises for example a vortex generating system 18 comprising at least one vortex generator 16.

As this will be presented in more details later in the description, and in some examples, the vortex generating system 18 comprises a plurality of vortex generators 16.

The aircraft 10 further comprises for example comprises a flight control computer 21.

The vortex generator 16 comprises a base 22, a baffle 24 and an actuator 26.

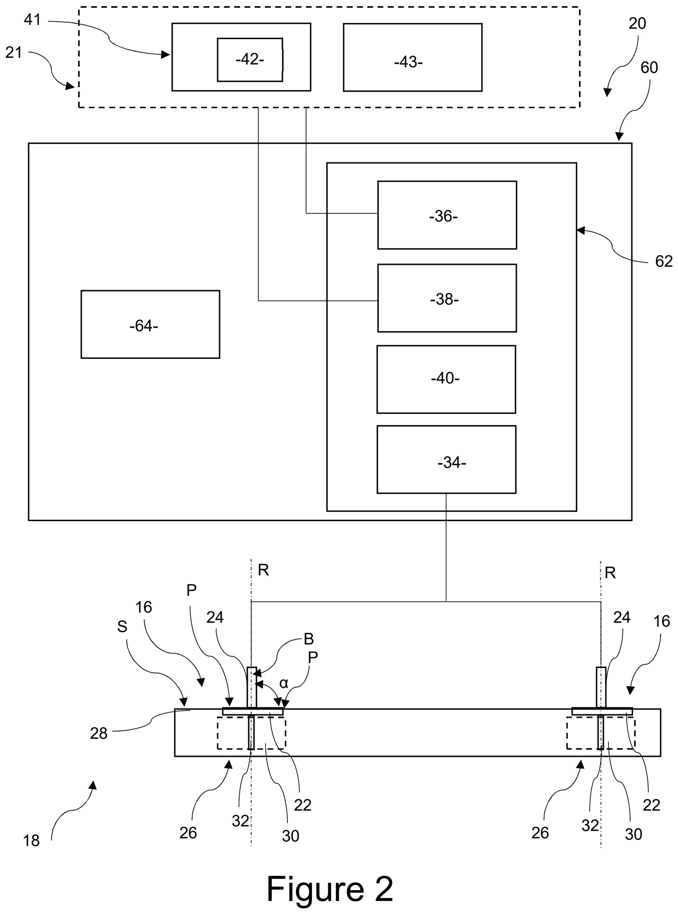

As illustrated on figure 2, the vortex generating system 18 further comprises one control unit 20.

The vortex generator 16 defines for example a longitudinal direction XV. The longitudinal direction of the vortex generator XV corresponds for example to the longitudinal direction of the aircraft XA when the vortex generator 16 is arranged on the aircraft 10.

The vortex generator 16 is arranged on an external surface S of the aircraft 10. For example, the vortex generator 16 is arranged on one of the wings 14 of the aircraft 10. As illustrated in figure 1, the vortex generator 16 is for example arranged on region A of the wing adjacent to a leading edge portion of the wing L. The vortex generator 16 is for example arranged at an extrados of the wing 14, for example on such a region A of the wing 14.

As illustrated on figure 2, the base 22 is for example configured to be connected to the external surface S of the aircraft 10. The base 22 is fixed relative to the external surface S. For example, as illustrated in figure 2, the base 22 is fastened to the external surface S of the aircraft 10, for example glued to the external surface S of the aircraft 10. The base 22 is fore example embedded in, or mounted on, the external surface S of the aircraft 10. In other examples the base 22 is formed by a portion of the external surface S facing the baffle 24.

As visible from figure 2, the base 22 defines for example a base plane P. The base plane P is for example, at least locally, substantially parallel to the external surface of the aircraft 10. For example, and as illustrated in the example of figure 2, the base plane P is flush and/or continuous with the external surface S of the aircraft. In examples, the base plane P is recessed relative to the external surface S or protrudes from the external surface S.

In the above-mentioned example in which the base 22 is formed by a portion of the external surface S facing the baffle 24, the base plane P is for example a curved plane, the curvature of such curved plane corresponding to the curvature of the external surface S.

The baffle 24 is connected to the base 22 and is moveable in rotation around a rotation axis R relative to the base 22.

For example, the baffle 24 is substantially flat.

As illustrated from figure 2, the baffle 24 extends for example substantially along a baffle plane B. The baffle plane B intersects the base plane P.

For example, the baffle plane B is substantially planar. In other non-illustrated examples, the baffle plane B is a curved plane. Such a curved plane comprises for example a direction along which lines forming the curve plane are parallel to each other.

An angle α between the baffle plane B and the base plane P is for example comprised between 45° and 135°. In the example of figure 2, the baffle plane B is substantially planar and is orthogonal to the base plane P.

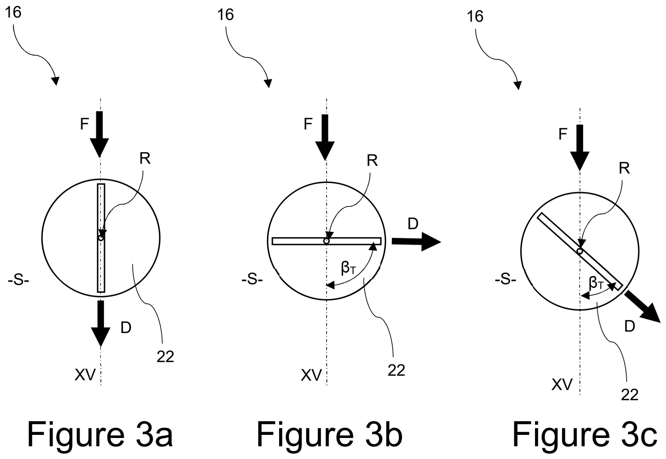

As illustrated in figures 3a-c, the baffle 24 defines a deflection direction D.

The deflection direction D of the baffle 24 is for example parallel to the baffle plane B. The deflection direction D is further for example parallel to the base plane P.

The baffle 24 is for example elongated along the deflection direction D.

The deflection direction D is moveable in rotation relative to the base 22 along with the baffle 24.

The baffle 24 is for example configured for deflecting an ambient airflow F to the deflection direction D.

In the example of figures 3a-c, the baffle 24 is symmetric relative to the rotation axis R.

In a non-illustrated example, the baffle 24 is asymmetric relative to the rotation axis R. For example, the rotation axis R is offset to a center (non-referenced) of the baffle 24 taken along the deflection direction D. In alternative, or in complement, the shape of the baffle 24, is asymmetric relative to the center (non-referenced) of the baffle 24.

The actuator 26 is configured to move the baffle 24 in rotation around the rotation axis R relative to the base 22.

As visible from figures 2 and 3, the rotation axis R is for example substantially perpendicular to the base plane P and/or to the deflection direction D.

In the above-mentioned example in which the base plane P is a curved plane, one understands for example from the term "substantially perpendicular to the base plane P" that the rotation axis R is for example substantially perpendicular to a normal plane and/or average plane of the base plane P facing the baffle 24.

The actuator 26 is for example connecting the base 22 to the baffle 24.

The actuator 26 for example comprises a motor 30 and a pin 32. The motor 30 is for example fastened to the base 22 and the pin 32 is for example fastened to the baffle 24. The motor 30 is then for example configured for moving the pin 32 in rotation for moving the baffle 24 in rotation relative to the base 22.

The actuator 26 is controllable into an active configuration. For example, the actuator is controllable into a plurality of active configuration.

As this will be presented in more details later, the actuator 26 is for example controllable in an active configuration, in which the actuator 26 is applying a controlling torque T_{C} to the baffle 24 depending on an acquired target active position of the baffle 24 relative to the base 22, later also referred to as target active position. The actuator 26 is then for example controllable into a plurality of active configurations, each corresponding to an acquired target active position for the baffle 24.

It is understood that the controlling torque is T_{C} is a torque applied to the baffle 24 along the rotation axis R, that is for rotating the baffle 24 around the rotation axis R.

For example, in each target position of the baffle 24 relative to the base 22, the deflection direction D is defining a target angle β_{T} with the longitudinal direction XV of the vortex generator 16. In other words, and for example, in each active configuration, the actuator 26 is applying a controlling torque T_{C} such that the deflection direction D defined by the baffle 24 is defining a target angle β_{T} with the longitudinal direction XV of the vortex generator 16. As this will be presented in more details and understood later, in some cases, even though the actuator 26 is applying a controlling torque T_{C} such that the deflection direction D defined by the baffle 24 is defining a target angle β_{T}, the angle defined by the deflection direction D relative to the longitudinal direction does not match the target angle β_{T}. As this will be presented in more details later, the actual angle between the deflection direction D and the longitudinal direction XV can for example be evaluated into an evaluated angle β_{E}.

The baffle 24 is for example illustrated in three distinct target active positions relative to the base 22 in figures 2a to 2c.

In figure 3a, the actuator 26 is in an active configuration corresponding to a cruise configuration. In such a cruise configuration, the actuator 26 moves the baffle 24 in a target active cruise position. The target angle β_{T} between the deflection direction D and the longitudinal direction XV of the vortex generator 26 is for example comprised between 0° and 10° when the baffle 24 is in its target active cruise position. In the example of figure 3a, the target angle β_{T} between the deflection direction D and the longitudinal direction XV of the vortex generator 26 is equal to 0° when the baffle 24 is in its target active cruise position (angle β_{T} being thus non referenced). For example, in complement, or in alternative, when the baffle 24 is in its target cruise active position, the angle between the ambient airflow F and the deflection direction D is comprised between 0° and 10° and is for example equal to 0°.

For example, and as this will be presented in more details later, when the actuator 26 is in an active configuration corresponding to a cruise configuration, the actuator 26 is controlled such that the controlling torque T_{C} is substantially null and such that the deflection direction D is aligned to the ambient airflow F.

In figure 3b, the actuator 26 is in an active configuration corresponding to an airbrake configuration. In such an airbrake configuration, the actuator 26 moves the baffle 24 in a target active airbrake position. The target angle β_{T} between the deflection direction D and the longitudinal direction XV of the vortex generator 26 is for example comprised between 70° and 90° when the baffle 24 is in its target active airbrake position. In the example of figure 3b, the target angle β_{T} between the deflection direction D and the longitudinal direction XV of the vortex generator 26 is equal to 90° when the baffle 24 is in its target active airbrake position.

In figure 3c, the actuator 26 is in an active configuration corresponding to a vortex generation configuration. In such a vortex generation configuration, the actuator 26 moves the baffle 24 in a target vortex generation position. The target angle β_{T} between the deflection direction D and the longitudinal direction XV of the vortex generator 26 is for example comprised between 10° and 70° when the baffle 24 is in its predetermined target vortex generation position. In the example of figure 3c, the target angle β_{T} between the deflection direction D and the longitudinal direction XV of the vortex generator 26 is equal to 45° when the baffle 24 is in its target active vortex generation position.

The control unit 20 is for example connected to the or each vortex generator(s) 16 of the vortex generating system 18.

As illustrated from figure 2, the control unit 20 comprises an acquisition module 36, a control module 34 and an evaluation module 40. The control unit 20 further comprises for example a transmission module 38.

When the vortex generating system 18 comprises a plurality of vortex generators 16, the control module 34 is for example connected to each of the vortex generators 16 and configured to control the actuators 26 of each vortex generators 16 into active configurations. It is understood that in some examples, the control module 34 may control different actuators 26 of the vortex generating system 18 into different active configurations.

The acquisition module 36 is configured for acquiring a target active position of the baffle 24 relative to the base 22.

The acquisition module 36 is for example configured for acquiring the target active position of the baffle relative to the base at sampling intervals. The sampling intervals are for example comprised between 0.001s and 1s. In an example, the sampling intervals are for example comprised between 0.001s and 0.1s for the acquisition module.

The acquisition module 36 is for example configured for directly acquiring the target position of the baffle 24 relative to the base 22.

In alternative, the acquisition module 36 is for example to configured for acquiring an active configuration instruction for the actuator 26, the active configuration instruction corresponding to an instruction to control the actuator 26 in a configuration in which the baffle 24 is in the target active position relative to the base 22.

For example, the acquisition module 36 is configured for acquiring the target active position from a plurality from target active positions. For example, the acquisition module 36 is configured for acquiring the target active position from at least a target active cruise position, a target active airbrake position and a target vortex generation position, for example as presented above.

As illustrated in figure 2, the acquisition module 36 is for example connected to the flight control computer 21.

The acquisition module 36 is for example configured for acquiring the target active position of the baffle 24 relative to the base 22 from the flight control computer 21.

For example, the flight control computer 21 comprises a human machine interface 41 configured for allowing selection of a target active position of the baffle 24 relative to the base 22 from a user. The acquisition module 36 is then for example configured for acquiring the target active position of the baffle 24 relative to the base 22 from such human machine interface 41.

In alternative, or in complement, the flight control computer 21 comprises an autonomous controlling system 43, configured for autonomously selecting a target active position of the baffle 24 relative to the base 22. The acquisition module 36 is then for example configured for acquiring the target active position of the baffle 24 relative to the base 22 from such an autonomous controlling system 43.

The acquisition module 36 is for example further configured for acquiring a reference control torque T_{R} based on the acquired target active position of the baffle 24 relative to the base 22.

To that end, the acquisition module 36 is for example connected to a memory element (non-represented), storing for example a database, the acquisition module being configured for acquiring the reference control torque T_{R} from such a memory element. In addition, or in alternative, correspondence between the acquired target active position of the baffle 24 and the reference control torque T_{R} is provided by the flight control computer 21, such that the acquisition module 36 is configured for acquiring the reference control torque T_{R} based on the acquired target active position of the baffle 24 relative to the base 22 from the flight control computer 21.

As this will be presented in more details later, the acquisition module 36 is for example further configured for acquiring a flight control information IF from the flight control computer 21.

The flight control information IF is for example an information describing the environment of the aircraft 10 and/or the configuration of the aircraft 10.

For example, the flight control information IF comprises for example at least one of the following information: flight situation of the aircraft, flight configuration of the aircraft, speed of the aircraft, altitude of the aircraft, configuration of the aircraft, and meteorological information.

The flight situation of the aircraft transcribes for example the environment in which the aircraft evolves. The flight situation of the aircraft comprises for example information on the spatiotemporal position of the aircraft and for example information on the environment at such spatiotemporal position.

It is understood that the flight situation of the aircraft encompasses for example information such as altitude of the aircraft and meteorological information, which will be described in more details later in this description.

The flight situation of the aircraft further comprises any other information describing the environment in which the aircraft evolves.

The flight configuration of the aircraft transcribes for example the configuration of the aircraft itself, that is, the operational setting of the aircraft, as well as how the aircraft evolves in its environment.

It is understood that the flight configuration of the aircraft encompasses for example information such as attitude of the aircraft, speed of the aircraft and configuration of the aircraft, which will be described in more details later in this description.

The flight configuration of the aircraft further comprises any other information describing the operational setting of the aircraft and how the aircraft evolves in its environment.

The attitude of the aircraft corresponds for example to an orientation of the aircraft relative to the ambient airflow F. For example, the attitude of the aircraft comprises information such as angle of attack and/or slip angle.

The speed of the aircraft corresponds for example to the true air speed of the aircraft. In some examples, the airspeed of the aircraft comprises three-dimensional speed components of the ambient airflow F relative to the aircraft 10.

The altitude of the aircraft is for example a QNH, QFE or QNE altitude. The altitude information describes for example the pressure of an ambient air outside the aircraft 10.

The configuration of the aircraft describes for example the aerodynamic and/or the weight configuration of the aircraft. For example, the configuration of the aircrafts describes position of moveable of the aircraft, such as for example high lift surfaces and/or control surfaces.

The meteorological information comprises for example any meteorological parameter such as for example temperature, humidity, etc...

As presented on figure 2, the control module 34 is for example connected to the or each vortex generators 16.

The control module 34 is configured for controlling the actuator 26 into an active configuration. In particular, and as presented above, the control module 34 is configured for controlling the actuator 26 into an active configuration, in which the actuator 26 is applying a controlling torque T_{C} to the baffle 24 depending on the acquired target active position.

The control module 34 is for example connected to the acquisition module 36 and receives the acquired target active position from the acquisition module 36. The control module 34 is then for example configured for controlling the actuator 26 so that the actuator 26 is applying the controlling torque T_{C} to the baffle 24 depending on such acquired target active position.

In an example, the controlling torque T_{C} applied to the baffle 24 by the actuator 26 in the active configuration is a torque required to maintain the baffle 24 in the target active position.

As this will be presented in more details later, one understand that the controlling torque T_{C} and the reference control torque T_{R} may be different. In particular, the controlling torque T_{C} corresponds for example to a torque actually required by the actuator 26 so that the baffle 24 reaches its target active position relative to the base 22 and the reference control torque T_{R} corresponds for example to a torque theoretically required by the actuator 26 so that the baffle 24 reaches its target active position.

The evaluation module 40 is configured for generating an inconsistency evaluation signal IS as a function of the controlling torque T_{C} and of the target active position. For example, the evaluation module 40 is configured for generating an inconsistency evaluation signal IS as a function of the controlling torque T_{C} and of the target angle β_{T}, the target angle β_{T} describing the target active position.

For example, the evaluation module 40 is configured for generating an inconsistency evaluation signal at sampling intervals, the sampling intervals duration being comprised between 0.001 and 1s. In an example, the sampling intervals are for example comprised between 0.01s and 1s for the acquisition module.

As understood from the above, the sampling intervals for the acquisition of the target active position of the baffle 24 relative to the base 22 by the acquisition module 36 are for example shorter than the sampling intervals for the generation of an inconsistency evaluation signal by the evaluation module 40. In such an example, and for example, the evaluation module 40 is configured for generating an inconsistency evaluation signal based on a plurality of subsequently acquired target active positions.

For example, the evaluation module 40 is configured for generating the inconsistency evaluation signal IS by comparing the controlling torque T_{C} to the reference control torque T_{R}. As seen above, the reference control torque T_{R} corresponds for example to the expected torque based on the target active position while the controlling torque T_{C} corresponds to the actually commanded torque the actuator 26, the inconsistency evaluation signal IS therefore describing a potential issue with the vortex generator 16 and/or unexpected airflow.

For example, when the control module 34 is configured for controlling the actuator into an active configuration corresponding to a cruise configuration, the reference control torque T_{R} is for example set to a null torque. In such an example, the controlling torque T_{C} might however be a non-null torque, for example because of local turbulences. The evaluation module 40 is then configured for generating an inconsistency evaluation signal IS in such a case. This is understood that the inconsistency evaluation signal IS can, in turn, be fed to the control unit 20, for example for updating the controlling torque T_{R}.

In an example, the evaluation module 40 is configured for evaluating an evaluated active position of the baffle 24 relative to the base 22, based on the controlling torque T_{C}. For example, the angle between the deflection direction D and the longitudinal direction XV can be evaluated into an evaluated angle β_{E} by the evaluation module 40 based on the controlling torque T_{C}.

The evaluation module 40 is then for example configured to generate the inconsistency evaluation signal IS by comparing the evaluated active position and the target active position, for example by comparing the evaluated angle β_{E} and the target angle β_{T}. As understood, the evaluated active position corresponds for example to the actual active position, evaluated based on the controlling torque while the target active position corresponds to the commanded active position of the baffle 24, the inconsistency evaluation signal IS therefore describing an issue with the vortex generator 16.

As presented above, in an example, when the acquisition module 36 is configured for acquiring flight control information IF from the flight control computer 21, the evaluation module 40 is configured for generating the inconsistency signal as a function of the controlling torque T_{C}, of the target active position and of the acquired flight control information IF.

For example, in such an example, the evaluation module 40 is configured for evaluating the reference control torque T_{C} based on the target active position and on the acquired flight control information IF. In particular, and for example, the acquired flight control information IF, together with the target active position, allows evaluating the aerodynamic loads applied to the vortex generator 16 and thus allows for example to evaluate the reference control torque T_{C} which is associated with the target active position under such aerodynamic loads.

The transmission module 38 is for example connected to a display 42 of the aircraft 10. As visible from figure 2, the display 42 is for example part of the human machine interface 41 of the flight control computer 21.

The transmission module 38 is for example configured to transmit an alert signal AS to be displayed, to the display 42, depending on the inconsistency evaluation signal IS generated by the evaluation module 40.

For example, the transmission module 38 is configured for transmitting an alert signal AS when the inconsistency evaluation signal IS exceeds a predetermined threshold. In alternative, or in complement, the alert signal AS comprises the inconsistency evaluation signal IS.

In the example of figure 2, the control unit 20 is formed as an information processing unit 60 comprising, for example, a memory 62 associated with a processor 64.

In the example of figure 2, the control module 34, the acquisition module 36, the transmission module 38 and the evaluation module 40 are each produced in the form of software executable by the processor 64. The memory 62 is then able to store a control software, designed to control the actuator 26 into an active configuration, an acquisition software, designed to acquire a target active position of the baffle 24 relative to the base 22, an evaluation software, designed for generating an inconsistency evaluation signal as a function of the controlling torque T_{C} and of the target active position, and a transmission software, designed to transmit an alert signal AS to be displayed, to the display 42 of the aircraft depending on the inconsistency evaluation signal IS.

The processor 64 of the information processing unit 60 is then able to execute the control software, the acquisition software, the transmission software and the evaluation software.

In a variant (not shown), the control module 34, the acquisition module 36, the transmission module 38 and the evaluation module 40 are each produced in the form of a programmable logic components, such as a FPGA (Field Programmable Gate Array), or in the form of a dedicated integrated circuit, such as an ASIC (Application Specific Integrated Circuit), or in the form of any combination of ASIC, FPGA and/or software.

In another variant (not shown) the control module 34, the acquisition module 36, the transmission module 38 and the evaluation module 40 are each implemented as analog signal processing devices.

When the control unit 20 is made in the form of one or several software programs, i.e., in the form of a computer program, it is further able to be stored on a medium, not shown, readable by computer. The computer-readable medium is for example a medium suitable for storing electronic instructions and able to be coupled with a bus of a computer system. As an example, the readable medium is an optical disc, a magnetic-optical disc, a ROM memory, a RAM memory, any type of non-volatile memory (for example, EPROM, EEPROM, FLASH, NVRAM), a magnetic card or an optical card. A computer program including software instructions is then stored on the readable medium.

A method of evaluation aerodynamic performances using a vortex generating system 18 as described above will now be presented.

The method comprises a step of acquiring a target active position of the baffle 24 of the vortex generator 16 of the vortex generating system 18, relative to the base 22 of said vortex generator 16.

During such an acquiring step, the acquisition module 36 is for example configured for acquiring the target active position of the baffle 24, for example from the flight control computer 21.

The method further comprises a step of controlling the actuator 26 of the vortex generator 16 into an active configuration.

During such a controlling step, the actuator is controlled for applying a controlling torque T_{C} to the baffle 24 depending on the acquired target active position.

The control module 34 is for example in communication with the acquisition module 36 and with the actuator 26 and is for example configured for controlling the actuator 26 such that the actuator 26 applies the controlling torque acquired from the acquisition module 36 to the baffle 24.

The method further comprises a step of generating an inconsistency evaluation signal IS as a function of the controlling torque T_{C} and of the target active position.

During such a generating step, the evaluation module 40 is for example configured for generating the inconsistency signal based on the controlling torque T_{C}, for example received from the actuator or from the control module 34, and based on the target active position for example received from the acquisition module 36 or the control module 34.

As presented above, a vortex generating system 18 in which the control unit 20 comprises an evaluation module 40 configured for generating an inconsistency evaluation signal IS as a function of the controlling torque T_{C} and of the target active position is providing a simple way for detecting an anomaly in the vortex generator 16, without requiring any additional sensor.

The comparison of the acquired reference control torque T_{R} to the controlling torque T_{C} and/or the comparison of the evaluated active position and the target active position is especially advantageous since this allows exploiting the available data for monitoring the performances of the vortex generating system 18.

The transmission module 38 configured to transmit an alert signal AS to be displayed is especially advantageous to improve situational awareness for operators of the aircraft 10 and ultimately improve safety of operation of the aircraft 10.

The use of an asymmetric baffle 24 relative to the rotation axis R is especially advantageous such that the baffle 24 adopt naturally a position in which the baffle 24 is aligned to the ambient airflow F.

Having an acquisition module configured for acquiring flight control information IF such that the evaluation module 40 is configured for generating the inconsistency signal IS as a function of such an acquired flight control information IF is especially advantageous to ensure the accuracy of the inconsistency signal.

The acquisition of the target position of the baffle 24 and/or the generation of an inconsistency evaluation signal IS at sampling intervals as above presented is especially advantageous to ensure a continuous monitoring of the vortex generator 16 with reasonable resources.

Having the actuators 26 of at least two of the plurality of vortex generators 16 controllable into different active configurations is especially advantageous since it allows the vortex generating system 18 to offer a fine control of the ambient airflow F.

## Claims

1. Vortex generating system (18) comprising:
- a vortex generator (16) comprising
+ a base (22), configured to be connected to an external surface (S) of an aircraft (10),
+ a baffle (24), connected to the base (22) and moveable in rotation around a rotation axis (R) relative to the base (22), and
+ an actuator (26), configured to move the baffle (24) in rotation around the rotation axis (R) relative to the base (22); and
- a control unit (20), connected to the vortex generator (16) and comprising:
+ an acquisition module (36), configured for acquiring a target active position of the baffle (24) relative to the base (22),
+ a control module (34), configured for controlling the actuator (26) into an active configuration, in which the actuator (26) is applying a controlling torque (T_{C}) to the baffle (24) depending on the acquired target active position, and
+ an evaluation module (40), configured for generating an inconsistency evaluation signal (IS) as a function of the controlling torque (T_{C}) and of the target active position.

2. Vortex generating system (18) according to claim 1, wherein the acquisition module (36) is configured for acquiring a reference control torque (T_{R}) based on the acquired target active position, the evaluation module (36) being configured for generating the inconsistency evaluation (IS) signal by comparing the acquired reference control torque (T_{R}) to the controlling torque (T_{C}).

3. Vortex generating system (18) according to claim 1 or 2, wherein the evaluation module (40) is configured for evaluating an evaluated active position of the baffle (24) based on the controlling torque (T_{C}), the evaluation module (40) being configured to generate the inconsistency evaluation signal (IS) by comparing the evaluated active position and the target active position.

4. Vortex generating system (18) according to any of the preceding claims, wherein the controlling torque (T_{C}) applied to the baffle (24) by the actuator (26) in the active configuration is a torque required to maintain the baffle (24) in the target active position.

5. Vortex generating system (18) according to any of the preceding claims, wherein the control unit (20) comprises a transmission module (38), configured to be connected to a display (42) of the aircraft (10), the transmission module (38) being configured to transmit an alert signal (AS) to be displayed, to the display (42) of the aircraft (10), depending on the inconsistency evaluation signal (IS) generated by the evaluation module (40).

6. Vortex generating system (18) according to any of the preceding claims, wherein the base (22) defines a base plane (P) configured to be substantially parallel to the external surface (S) of an aircraft, the rotation axis (R) being substantially perpendicular to the base plane (P).

7. Vortex generating system (18) according to any of the preceding claims, wherein the baffle (24) is asymmetric relative to the rotation axis (R).

8. Vortex generating system (18) according to any of the preceding claims, wherein the acquisition module (36) is configured to be connected to a flight control computer (21) and configured for acquiring a flight control information (IF) from the flight control computer (21), the evaluation module (40) being configured for generating the inconsistency signal (IS) as a function of the controlling torque (T_{C}), of the target active position and of the acquired flight control information (IF).

9. Vortex generating system (18) according to claim 8, wherein the flight control information (IF) comprises at least one of the following information:
- flight situation of the aircraft;
- flight configuration of the aircraft;
- attitude of the aircraft;
- speed of the aircraft;
- altitude of the aircraft;
- configuration of the aircraft; and
- meteorological information.

10. Vortex generating system (18) according to any of the preceding claims, wherein the acquisition module (36) is configured for acquiring the target active position from a plurality of predetermined target active positions.

11. Vortex generating system (18) according to any of the preceding claims, wherein the acquisition module (18) is configured for acquiring the target active position of the baffle (24) relative to the base (22) at sampling intervals and/or the evaluation module (40) is configured for generating an inconsistency evaluation signal (IS) at sampling intervals, the sampling intervals duration being comprised between 0.001 and 1s.

12. Vortex generating system (18) according to any of the preceding claims, wherein the vortex generating system (18) comprises a plurality of vortex generators (16), the control module (34) being connected to each of the vortex generators (16).

13. Vortex generating system according to claim 12, wherein the control module (34) is configured to control the actuators (26) of at least two of the plurality of vortex generators (16) into different active configurations.

14. Aircraft (10) comprising a vortex generating system (18) according to any of the claims 1 to 13.

15. Method of evaluating aerodynamic performances using a vortex generating system (18) according to any of the claims 1 to 13, the method comprising the following steps:
- acquiring a target active position of the baffle (24) of the vortex generator of the vortex generating system (18), relative to the base (22) of said vortex generator (16),
- controlling the actuator (26) of the vortex generator (16) into an active configuration, in which the actuator (26) is applying a controlling torque (T_{C}) to the baffle (24) depending on the acquired target active position, and
- generating an inconsistency evaluation signal (IS) as a function of the controlling torque (T_{C}) and of the target active position.
